# EUROPÄISCHE PATENTANMELDUNG

(11) **EP 1 139 053 A2**
(43) Veröffentlichungstag der Anmeldung: **04.10.2001**
(21) Anmeldenummer: 01107032.3
(22) Anmeldetag: 21.03.2001
(51) Int. Cl.: F28D 20/00

(54) **Wärmespeicher**

(30) Priorität: 31.03.2000 DE 10016308
(71) Anmelder: Kruck, Alfons, 91795 Dollnstein (DE)
(72) Erfinder: Kruck, Alfons, 91795 Dollnstein (DE)
(74) Vertreter: Neubauer, Hans-Jürgen, Dipl.-Phys.

(57) **Zusammenfassung**

Die Erfindung betrifft einen Wärmespeicher (1), bestehend aus einem Speicherbehälter (2) mit einer Behälterwand als fester Außenhülle (3), aus einem Wärmetauscher (13) als Behältereinsatz mit aus dem Speicherbehälter (2) geführten Anschlüssen (25, 26) sowie aus einem im Speichervolumen (14) des Speicherbehälters (2) enthaltenen und zumindest Teile des Wärmetauschers (13) umgebenden Speichermedium (15). Erfindungsgemäß ist die Behälterwand doppelwandig ausgeführt und zusätzlich zur festen Außenhülle (3) eine flexible Innenhülle (12) als zumindest teilweise Begrenzung des Speichermediums (15) so eingesetzt, dass zwischen der festen Außenhülle (3) und der flexiblen Innenhülle (12) ein vom Speichervolumen (14) dicht getrennter Ausgleichsraum (27) mit veränderbarem Volumen gebildet ist. Die Innenhülle (12) ist mit einer Druckkraft beaufschlagbar, die die Innenhülle (12) in Richtung auf das Speichervolumen (14) und damit auf das darin enthaltene Speichermedium (15) drängt und dieses wiederum mit einem entsprechenden Anpressdruck an den Wärmetauscher (13) anpresst. In einer besonders bevorzugten Ausführungsform ist ferner ein Wärmespeicher (1) mit einem als Wärmetauscherkäfig ausgebildeten Wärmetauscher (13) vorgesehen, dessen wärmetauschaktive und vom Speichermedium (15) allseitig umgebene Käfigelemente in einem großen Volumenbereich des Speichervolumens (14) angeordnet sind.

## Beschreibung

Die Erfindung betrifft einen Wärmespeicher nach dem Oberbegriff des Anspruchs 1.

Wärmespeicher dienen regelmäßig dazu, eine gerade anfallende Wärmemenge aus einer oder mehreren Wärmequellen für eine spätere Verwendung abzuspeichern. Dieses Problem tritt insbesondere in Verbindung mit Raumheizungen bei angeschlossenen Solaranlagen auf, mit denen Wärme meistens dann zur Verfügung gestellt wird, wenn diese für eine Raumheizung nicht oder nur mit untergeordneten Mengen benötigt wird.

In Verbindung mit einer Raumheizung ist beispielsweise ein Warmwasser-Schicht-Speicher bekannt (EP 0 683 362 A1), bei dem selbsttätig über einen Schichteinsatz eine vertikale und temperaturabhängige Schichtung von Wasser im Speichervolumen erreicht wird. Dazu wird unmittelbar das in einem Heizkreislauf befindliche Wasser für die Wärmespeicherung verwendet.

Weiter sind in Verbindung mit Raumheizungen gattungsgemäße Wärmespeicher bekannt, bei denen in einem Speichervolumen eines Speicherbehälters separate Speichermedien in Verbindung mit einem Wärmetauschereinsatz verwendet sind und Wasser eines Heizkreislaufs durch den Wärmetauscher geleitet wird. Als Speichermedien werden bei sogenannten Reaktions-Wärme-Speichern feste Stoffe in Granulatform oder Pulverform eingesetzt, bei denen eine Wärmespeicherung in einem speicherrelevanten Temperaturbereich durch wenigstens einen reversibel unter Wärmeentwicklung ablaufenden chemischen Prozess erfolgt. Ein solches Speichermedium ist beispielsweise unter der Bezeichnung (Zeolite) auf dem Markt erhältlich.

In einer prinzipiell anderen Ausführungsform werden als Speichermedien Stoffe verwendet, die unter Wärmeabgabe oder Wärmeentwicklung ihren Aggregatzustand bei der Erwärmung oder Abkühlung ändern. Insbesondere wird dabei als Speichermedium Wasser mit einer Aggregatzustandsänderung zu Eis verwendet.

Bei den bekannten Reaktionswärmespeichern mit dem Speichermedium "Zeolite" werden übliche Speicherbehälter mit fester und starrer Außenhülle verwendet. Ein solches System erfordert einen gewissen Unterdruck im Speicher, wodurch sich der Wärmeübergang zwischen dem als festes, kugelförmiges Pulver eingesetzten Speichermedium und dem Wärmetauscher verschlechtert und wodurch auch die Wärmeleitung im Speichermedium selbst verschlechtert wird. Der Ein- und Austrag von Wärme wird zwar mit zunehmendem Unterdruck schlechter, vorteilhaft würde jedoch mit zunehmendem Unterdruck eine Austreibetemperatur unter ca. 70°C sinken mit der Möglichkeit einer Erweiterung des Einsatzbereichs. Mit den bekannten Speichern sind jedoch solche Beeinflussungen nicht möglich.

Probleme ergeben sich auch bei den oben genannten Wärmespeichern, bei denen insbesondere Wasser als Speichermedium verwendet wird und die Änderung des Aggregatzustands fest/flüssig für eine Wärmespeicherung ausgenützt wird. Dabei treten Volumenänderungen auf, da im festen Zustand das Speichermedium ein größeres Raumvolumen als im flüssigen Zustand einnimmt. Dies führt zu Dehnungsproblemen im Druckspeicher beim Erstarren (Frostschäden). Bei einem Schmelzen des Speichermediums schmilzt vorrangig der Wärmetauscher frei, wodurch der Wärmeübergang zwischen dem weiter abschmelzenden, erstarrten Speichermedium und dem Wärmetauscher nachteilig verringert ist.

Ein weiteres Problem bei diesen Wärmespeichern ergibt sich durch eine Dichteänderung zwischen dem festen und flüssigen Aggregatzustand, indem feste Teile nach oben schwimmen. Dadurch entfernen sich feste Teile von einem, in einem zentraleren Bereich angeordneten Wärmetauscher, die dann durch schlechte Wärmeleitung des flüssigen Speichermediums nicht mehr für einen Wärmeentzug oder eine Wärmezufuhr erreichbar sind. Wird jedoch der Wärmetauscher im oberen Speichervolumenbereich angeordnet, ergibt sich zwar eine gute Wärmezufuhr zu den an den Wärmetauscher heranschwimmenden festen Teilen, jedoch vereist der Wärmetauscher bei einem Wärmeentzug, so dass dann die darunterliegenden flüssigen Bereiche für einen angestrebten guten Wärmeübergang nicht mehr erreichbar sind. Umgekehrt ist eine Wärmetauscheranordnung im unteren Speicherbereich gut bei einem Wärmeentzug, da die festen Teile nach oben abschwimmen und flüssiges Speichermedium dann den Wärmetauscher umspült. Bei einer Wärmezufuhr ist diese Anordnung jedoch ungünstig, da die nach oben schwimmenden festen Teile für einen Wärmeübergang nicht mehr erreicht werden.

Aufgabe der Erfindung ist es, einen gattungsgemäßen Wärmespeicher so weiterzubilden, dass bei einfachem Aufbau des Wärmespeichers die Wärmeeintragung und Wärmeaustragung in das Speichermedium verbessert werden.

Diese Aufgabe wird mit den Merkmalen des Anspruchs 1 gelöst.

Gemäß Anspruch 1 ist die Behälterwand doppelwandig ausgeführt und zusätzlich zur festen Außenhülle ist eine flexible Innenhülle als zumindest teilweise Begrenzung des Speichermediums eingesetzt dergestalt, dass zwischen der festen Außenhülle und der flexiblen Innenhülle ein vom Speichervolumen für das Speichermedium dicht getrennter Ausgleichsraum mit veränderbarem Volumen gebildet ist. Die Innenhülle ist mit einer Druckkraft beaufschlagbar, die die Innenhülle in Richtung auf das Speichervolumen und damit auf das darin enthaltene Speichermedium drängt und dieses wiederum mit einem entsprechenden Anpressdruck an den Wärmetauscher anpresst.

Bei einer solchen Anordnung wird erreicht, dass bei Wärmespeichern, die Aggregatzustandsänderungen eines Speichermediums für eine Wärmespeicherung nutzen, negative Auswirkungen der eingangs beschriebenen Volumenänderungen und Dichteänderungen besser beherrschbar sind und ein verbesserter Wärmeübergang gewährleistet ist. Bei Reaktions-Wärme-Speichern mit einer pulver-, körnigen- oder kugelförmigen Konsistenz des Speichermediums wird vorteilhaft der Anpressdruck an den Wärmetauscher erhöht, was vorteilhaft zu einem verbesserten Wärmeübergang führt.

Zudem ist der gesamte Aufbau des erfindungsgemäßen Wärmespeichers einfach und preiswert durchführbar.

Gemäß Anspruch 2 ist die Innenhülle mit Druckkraft beaufschlagbar, indem der Innenraum der Innenhülle bzw. das Speichervolumen durch Evakuierung mit einem Unterdruck beaufschlagt wird. Nach Anspruch 3 ist dazu in einer einfachen Anordnung lediglich eine Unterdruckpumpe über einen Unterdruckanschluss an das Speichervolumen anzuschließen. Durch den Unterdruck wird die Innenhülle nach Innen in Richtung auf einen Wärmetauscher gezogen, wodurch vorteilhaft ein chemisch reagierendes oder den Aggregatzustand änderndes Speichermedium näher an den Wärmetauscher herangeführt und/oder angepresst wird.

Alternativ zu der vorstehenden Maßnahme oder ergänzend zu dieser Maßnahme wird mit Anspruch 4 vorgeschlagen, dass die Innenhülle durch Herstellung eines Überdrucks im Ausgleichsraum zwischen der festen Außenhülle und der flexiblen Innenhülle mit Druckkraft beaufschlagt wird. Grundsätzlich kann hier ein Überdruck durch Einbringung eines beliebigen, gasförmigen oder flüssigen Mediums in den Ausgleichsraum erfolgen. Eine einfache Ausführung ergibt sich insbesondere nach Anspruch 5, indem eine Druckpumpe an einen Überdruck-Anschluss des Ausgleichsraums angeschlossen wird, mit der Luft als Überdruckmedium eingepumpt wird. Ein solches, in den Ausgleichsraum eingebrachtes Luftpolster hat zudem vorteilhaft die Funktion einer Wärmedämmung. Grundsätzlich kann jedoch ein Teil des Ausgleichsraums ohnehin mit Wärmedämmmaterial gefüllt oder ausgekleidet sein.

In einer besonders bevorzugten Ausführungsform nach Anspruch 6 ist der Wärmetauscher als Wärmetauscherkäfig ausgebildet, dessen wärmetauschaktiven und vom Speichermedium allseitig umgebene Käfigelemente in einem großen Volumenbereich des Speichervolumens, insbesondere in einem zentralen Speichervolumenbereich angeordnet sind. Mit einer solchen Käfiganordnung mit über einen Großteil des Speichervolumens verteilten Käfigelementen wird ein guter Wärmeübergang für unterschiedliche Speicherzustände erreicht. Insbesondere bei einem Speichermedium mit Aggregatzustandsübergängen, wie bei Wasser, wird erreicht, dass feste Teile nicht ohne weiteres aus dem wirksamen Wärmetauscherbereich wegschwimmen können sondern im Käfigbereich unter Anlage an Wärmetauscherelementen zurückgehalten werden.

Mit den Merkmalen des Anspruchs 7 wird eine konkrete Ausbildung eines solchen käfigförmigen Wärmetauschers beansprucht, wobei Käfigelemente in Form von Wärmetauscherrohren mehrschalig einen zentralen Wärmetauscherbereich umgeben. Damit ist ein günstiger hoher Wärmeübergang zwischen Speichermedium und Wärmetauscher im gesamten Speichervolumen gewährleistet, insbesondere in Verbindung mit der vorstehend beschriebenen Funktion der flexiblen Innenhülle.

Mit den Merkmalen des Anspruchs 8 ist eine konkrete, vorteilhafte und konstruktiv einfache Ausbildung des Speicherbehälters beansprucht mit jeweils vertikal gegenüberliegenden Öffnungsstutzen, die durch Deckelplatten verschließbar sind. Durch diese Deckelplatten können einfach Anschlüsse für den Wärmetauscher geführt werden. Zudem kann eine im Handel erhältliche schlauchförmige, flexible Innenhülle verwendet werden, die für eine dichte Anbringung gegenüber dem Ausgleichsraum mit den Enden zwischen Flansche der Öffnungsstutzen und der Deckelplatten einklemmbar ist.

Die vorstehend beanspruchten Ausführungen von Wärmespeichern eignen sich gemäß Anspruch 9 hervorragend für Reaktions-Wärme-Speicher und nach Anspruch 10 für Wärmespeicher mit aggregatzustandsändernden Speichermedien.

Anhand einer Zeichnung wird die Erfindung näher erläutert.

Die einzige Figur zeigt schematisch einen Querschnitt durch einen Wärmespeicher 1, der z. B. als Reaktions-Wärme-Speicher ausgebildet ist. Der Wärmespeicher 1 umfasst einen zylindrischen Stahlbehälter als Speicherbehälter 2, der eine feste Außenhülle 3 als Behälterwand aufweist.

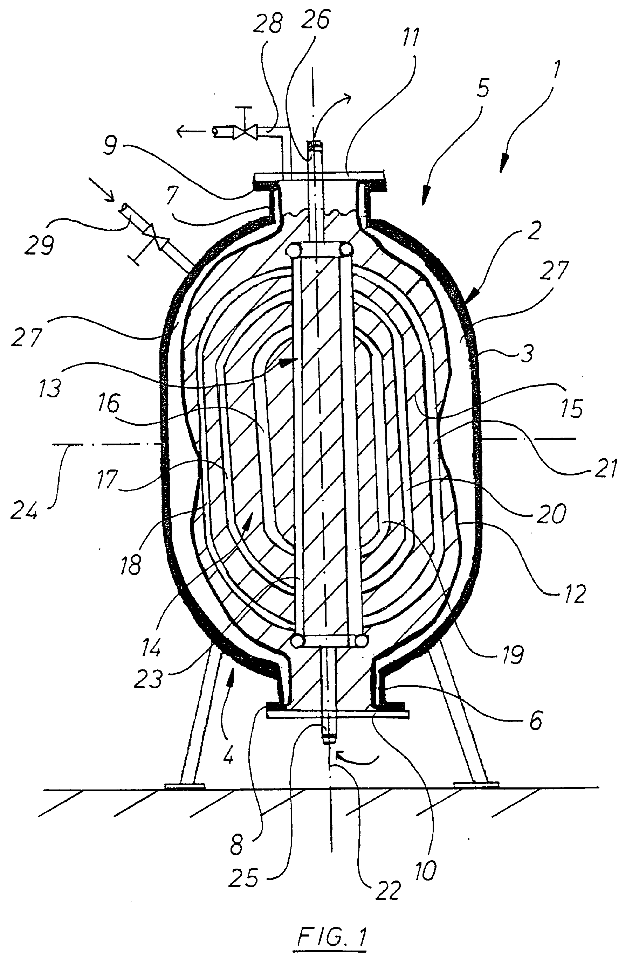

Der Speicherbehälter 2 weist in der in der Fig. 1 dargestellten Funktionsstellung eine vertikale Zylinderachse 22 sowie einen kalotten- bzw. schalenförmigen Bodenbereich 4 und Deckelbereich 5 auf.

Der Speicherbehälter 2 weist im Bodenbereich 4 und im Deckelbereich 5 jeweils einen Öffnungsstutzen 6, 7 mit einem Flansch 8, 9 auf, der jeweils durch eine aufgeschraubte Deckelplatte 10, 11 verschlossen ist.

Wie dies aus der einzigen Figur weiter ersichtlich ist, ist die Behälterwand des Speicherbehälters 2 doppelwandig ausgeführt und weist zusätzlich zur festen Außenhülle 3 eine flexible Innenhülle 12 in der Art eines Gummi-Folien-Schlauchs oder eines Kunststoff-Folien-Schlauchs auf, die im Bodenbereich 4 zwischen dem Flansch 8 und der Deckelplatte 10 sowie im Deckelbereich 5 zwischen dem Flansch 9 und der Deckelplatte 11 dicht eingeklemmt ist, was hier aber lediglich schematisch dargestellt ist.

Wie dies aus Fig. 1 weiter ersichtlich ist, ist in dem Speicherbehälter 2 als Behältereinsatz ein als Wärmetauscherkäfig ausgebildeter Wärmetauscher 13 eingesetzt, der von einem im Speichervolumen 14 des Speicherbehälters 2 enthaltenen Speichermedium 15 umgeben ist. Als Speichermedium 15 kann beispielsweise ein Granulat oder Wasser verwendet werden.

Der Wärmetauscher 13 weist im Speichervolumen 14 verteilt angeordnete, vertikale Wärmetauscherrohre 16, 17, 18, 19, 20, 21 auf, die jeweils endseitig bogenförmig mit wenigstens einem in der vertikalen Zylinderachse 22 liegenden Durchströmrohr 23 so verbunden sind, dass sich die Wärmetauscherrohre 16, 17, 18, 19, 20, 21 zu beiden Seiten einer mittleren Querebene 24 mit vorzugsweise in etwa gleichen Längen erstrecken und die radial inneren Wärmetauscherrohre 16, 19 kürzer als die radial mittleren Wärmetauscherrohre 17, 20 sind, die wiederum kürzer als die radial äußeren Wärmetauscherrohre 18, 21 sind.

Wie dies aus der Fig. 1 weiter ersichtlich ist, ist das axiale Durchströmrohr 23 im Bodenbereich 4 des Speicherbehälters 2 mit einem Einströmanschluss 25, z. B. einem Einström-Wasseranschluss für eine Heizungsanlage, durch die Deckelplatte 10 geführt, während im Deckelbereich 5 ein Ausströmanschluss 26, z. B. ein Ausström-Wasseranschluss für eine Heizungsanlage, des Durchströmrohrs 23 durch die Deckelplatte 11 aus dem Speicherbehälter 2 herausgeführt ist.

Der Fig. 1 kann weiter entnommen werden, dass zwischen der festen Außenhülle 3 und der flexiblen Innenhülle 12 ein vom Speichervolumen 14 dicht getrennter Ausgleichsraum 27 mit veränderbarem Volumen gebildet ist, wobei die flexible Innenhülle 12 so mit einer Druckkraft beaufschlagbar ist, dass die Innenhülle 12 in Richtung auf das Speichervolumen 14 und damit auf das darin enthaltene Speichermedium 15 drängt und dieses wiederum mit einem entsprechenden Anpressdruck an den Wärmetauscher 13 anpresst. Die Druckkraft kann dabei z. B. über eine an einem Unterdruckanschluss 28 des Speichervolumens 14 angeschlossene Unterdruckpumpe, die hier allerdings nicht dargestellt ist, hergestellt werden. Alternativ oder zusätzlich dazu kann zur Herstellung der Druckkraft die flexible Innenhülle 12 vom Ausgleichsraum 27 her mit Druckkraft beaufschlagt werden. Dazu ist an einen Überdruckanschluss 29 eine Druckpumpe, die hier nicht dargestellt ist, angeschlossen.

Als Speichermedium 15 können z. B. feste Stoffe in Granulatform verwendet werden, deren Wärmespeicherung über wenigstens einen reversibel unter Wärmeentwicklung ablaufenden chemischen Prozess erfolgt. Alternativ dazu kann als Speichermedium 15 aber auch Wasser verwendet werden, das in einem speicherrelevanten Temperaturbereich seinen Aggregatzustand durch Erwärmung oder Abkühlung ändert.

Insgesamt kann mit einem derartigen Aufbau des Wärmespeichers 1 die Wärmeeintragung und die Wärmeaustragung des Speichermediums 15 wesentlich verbessert werden.

## Patentansprüche

1. Wärmespeicher,
bestehend
aus einem Speicherbehälter mit einer Behälterwand als fester Außenhülle,
aus einem Wärmetauscher als Behältereinsatz mit einem aus dem Speicherbehälter geführten Einström- und Ausströmanschluss, und
mit einem im Speichervolumen des Speicherbehälters enthaltenen und zumindest Teile des Wärmetauschers umgebenden Speichermedium,
**dadurch gekennzeichnet,**
**dass** die Behälterwand doppelwandig ausgeführt ist und zusätzlich zur festen Außenhülle (3) eine flexible Innenhülle (12) als zumindest teilweise Begrenzung des Speichermediums (15) eingesetzt ist dergestalt, dass zwischen der festen Außenhülle (3) und der flexiblen Innenhülle (12) ein vom Speichervolumen (14) dicht getrennter Ausgleichsraum (27) mit veränderbarem Volumen gebildet ist, und
**dass** die Innenhülle (12) mit einer Druckkraft beaufschlagbar ist, die die Innenhülle (12) in Richtung auf das Speichervolumen (14) und damit auf das darin enthaltene Speichermedium (15) drängt und dieses wiederum mit einem entsprechenden Anpressdruck an den Wärmetauscher (13) anpresst.

2. Wärmespeicher nach Anspruch 1, **dadurch gekennzeichnet, dass** die Innenhülle (12) durch zumindest teilweise Evakuierung ihres Innenraums, entsprechend einer Herstellung von Unterdruck im Speichervolumen (14), mit Druckkraft beaufschlagbar ist.

3. Wärmespeicher nach Anspruch 2, **dadurch gekennzeichnet, dass** zur Herstellung des Unterdrucks eine Unterdruckpumpe an einem Unterdruckanschluss (28) des Speichervolumens (14) angeschlossen ist.

4. Wärmespeicher nach einem der Ansprüche 1 bis 3, **dadurch gekennzeichnet, dass** die Innenhülle (12) durch Herstellung eines Überdrucks, vorzugsweise eines Luft-Überdrucks, im Ausgleichsraum (27) mit Druckkraft beaufschlagbar ist.

5. Wärmespeicher nach Anspruch 4, **dadurch gekennzeichnet, dass** zur Herstellung des Überdrucks eine Druckpumpe an einem Überdruckanschluss (29) des Ausgleichsraums (27) angeschlossen ist.

6. Wärmespeicher mit einem in einen Speicherbehälter eingesetzten Wärmetauscher, insbesondere nach einem der Ansprüche 1 bis 5, **dadurch gekennzeichnet, dass** der Wärmetauscher (13) als Wärmetauscherkäfig ausgebildet ist, dessen wärmetauschaktive und vom Speichermedium (15) allseitig umgebene Käfigelemente in einem großen Volumenbereich des Speichervolumens (14) angeordnet sind.

7. Wärmespeicher nach Anspruch 6, **dadurch gekennzeichnet,**
**dass** der Speicherbehälter (2) ein zylindrischer Stahlbehälter mit in Funktionsstellung vertikaler Achse (22) und mit jeweils einem schalenförmigen Bodenbereich (4) und Deckelbereich (5) ist,
**dass** der Wärmetauschereinsatz im Speichervolumen (14) verteilt angeordnete, vertikale Wärmetauscherrohre (16, 17, 18, 19, 20, 21,) aufweist, die jeweils endseitig bogenförmig mit wenigstens einem in der Zylinderachse (22) liegenden Durchströmrohr (23) verbunden sind dergestalt, dass sich die Wärmetauscherrohre (16, 17, 18, 19, 20, 21) zu beiden Seiten einer mittleren Querebene (24) mit etwa gleichen Längen erstrecken und die radial inneren Wärmetauscherrohre (16, 19) kürzer als die radial äußeren Wärmetauscherrohre (18, 21) sind, und
**dass** das axiale Durchströmrohr (23) mit Anschlüssen (25, 26) für ein Arbeitsmedium, insbesondere mit Wasseranschlüssen für eine Heizungsanlage oben und unten aus dem Speicherbehälter (2) herausgeführt ist.

8. Wärmespeicher nach Anspruch 7, **dadurch gekennzeichnet,**
**dass** der Speicherbehälter (2) im Bodenbereich (4) und im Deckelbereich (5) jeweils einen Öffnungsstutzen (6, 7) mit einem Flansch (8, 9) aufweist, der jeweils durch eine aufgeschraubte Deckelplatte (10, 11) verschlossen ist,
**dass** durch die Deckelplatten (10, 11) die zugeordneten Anschlüsse (25, 26) des Durchströmrohrs (23) geführt sind, und
**dass** zwischen dem jeweiligen Flansch (8, 9) und der zugeordneten Deckelplatte (10, 11) ein Ende einer schlauchförmigen, flexiblen Innenhülle (12) in der Art eines Gummi-Folien-Schlauchs oder eines Kunststoff-Folien-Schlauchs dicht eingeklemmt ist.

9. Wärmespeicher nach einem der Ansprüche 1 bis 8, **dadurch gekennzeichnet, dass** der Wärmespeicher (1) als Reaktions-Wärme-Speicher ausgebildet ist, wobei als Speichermedium (15) feste Stoffe in Granulatform, vorzugsweise als Pulver, verwendet sind, deren Wärmespeicherung über wenigstens einen reversibel unter Wärmeentwicklung ablaufenden chemischen Prozess erfolgt.

10. Wärmespeicher nach einem der Ansprüche 1 bis 9, **dadurch gekennzeichnet, dass** als Speichermedium (15) Stoffe verwendet sind, insbesondere Wasser, die in einem speicherrelevanten Temperaturbereich ihren Aggregatzustand bei Erwärmung oder Abkühlung ändern.
